# EUROPEAN PATENT APPLICATION

(11) **EP 4 180 277 A1**
(43) Date of publication of application: **17.05.2023**
(21) Application number: 21208624.3
(22) Date of filing: 16.11.2021
(51) Int. Cl.: B60R 19/34

(54) **CONNECTING ELEMENT, METHOD FOR PRODUCING A CONNECTING ELEMENT AND CRASH MANAGEMENT SYSTEM**

(71) Applicant: Constellium Singen GmbH, 78224 Singen (DE)
(72) Inventor: FEUERSTEIN, Martin, 78224 SINGEN (DE); GOEGER, Aslan, 78244 GOTTMADINGEN (DE)
(74) Representative: Constellium - Propriété Industrielle

(57) **Abstract**

The invention relates to a connecting element (10) for fastening a bumper (1) to a body structure of a vehicle, the connecting element (10) having a first end face (16) facing the bumper (1) and a second end face (18) facing the body structure, and the connecting element (10) being realized as an extrusion component and having at least one screw section (14) monolithically connected to the extrusion component and having an internal thread (12), the screw section (14) extending over a part of the length of the connecting element (10) in the direction of a longitudinal axis (22) of the connecting element (10).

## Description

### Field of the invention

The invention relates to a connecting element for fastening a bumper to a body structure of a vehicle, to a method for producing such a connecting element, and to a crash management system having a bumper and a connecting element according to the invention.

### Background

A connecting element which, in contrast to the use described in the present case, is used to fasten a towing eye to a vehicle but otherwise has the features of the preamble of claim 1, is known from EP 1 721 786 B1 of the applicant. The known connecting element realized as a crash box has a central channel having a screw section within the cross section of the connecting element, the screw section being configured to interact with a rod-shaped towing eye via a thread section. To this end, the rod-shaped section of the towing eye passes through an opening in the bumper, the screw section being disposed at a distance to the end face of the connecting element facing the bumper. The distance is necessary in order to allow use of the same towing eye, whose rod-shaped section has a predetermined length, both at the front end and at the rear end of a vehicle.

Furthermore, the document mentioned above discloses that such a connecting element can be either welded to the bumper or screwed to the bumper on the end face facing the bumper. In the case of a screw connection, such screw connections are typically characterized in that separate fastening lugs or similar parts are required in addition to the connecting element, said separate fastening lugs or similar parts typically being connected to the connecting element by welded joints.

### Disclosure of the invention

The connecting element according to the invention for fastening a bumper to a body structure of a vehicle having the features of claim 1 has the advantage that the elements required for fastening the bumper to the connecting element can be produced monolithically or simultaneously with the manufacturing of the connecting element, separate assembly processes or separate fastening elements, such as fastening lugs or the like, thus not being necessary. Additionally, the monolithic manufacturing of the fastening element and the connecting element has the advantage that particularly high levels of strength can be achieved, allowing a reliable fastening of the bumper to the connecting element by means of fastening screws. Furthermore, the specifically claimed arrangement and geometry (length) of the screw section used to fasten the bumper have no or only little negative impact on the properties of the connecting element required in the case of a crash, the connecting element according to the invention thus having advantageous deformation properties.

In view of the above explanations and advantages of the connecting element according to the invention, the invention thus provides that said connecting element has a screw section which extends at least almost to a first end face of the connecting element facing the bumper via its internal thread, the length of the screw section or the internal thread being between twice and three times the diameter of the internal thread.

In the case of an accident, the impact on the crash properties of the connecting element is only minimal, in particular as a result of the fact that the internal thread or the screw section is located or disposed on the first end face of the connecting element facing the bumper and the fact that it has a relatively short length in relation to the total length of the connecting element, because the much greater part of the length of the connecting element has no screw section; the stiffening effect of the screw section would otherwise have to be taken into account in the design of the connecting element with respect to the deformation properties of the fastening element. Depending on the specific application, this can require relatively high effort or may be difficult to compensate.

Advantageous embodiments of the connecting element according to the invention for fastening a bumper to a body structure of a vehicle are disclosed in the dependent claims.

Particularly preferably, the at least one screw section is disposed on an outer wall of the connecting element on the side of the outer wall which is facing away from the longitudinal axis of the connecting element. In particular, this allows the simplification of the manufacturing process (extrusion) of the connecting element in such a manner that the heat development of the deformed material occurring during the extrusion can better dissipate in the area of the screw section or the corresponding section of the extrusion profile can be better cooled. The position of the screw section on the outer side of the connecting element also allows a relatively easy mechanical removal of unnecessary areas.

An embodiment of the latter proposal particularly preferably provides that two screw sections are provided on the fastening element for fixing the bumper, the two screw sections preferably being disposed diametrically opposite to the longitudinal axis of the connecting element. Such a use of two screw sections or two screw connections on a connecting element allows a particularly safe absorption or transmission of forces from the bumper to the connecting element; in particular, shearing or bending of the bumper is avoided in the contact area of the bumper on the end face of the connecting element, in particular if the two screw sections are disposed on opposite sides of the cross section of the connecting element.

Particularly advantageously, the design of the connecting element provides that said connecting element is realized as a crash box and has a weakening area, in particular in the form of a dent or bead projecting in the direction of the longitudinal axis of the fastening element, on at least one outer wall, the dent or bead extending over a part of the length of the connecting element, in each case having a distance from the two end faces of the connecting element, and that, on the second end face of the connecting element facing the body structure, the screw section extends at most to the level of the side of the weakening area facing the second end face, preferably only into the weakening area. In the case of a crash, such a design of the connecting element allows a targeted deformation or folding of the connecting element in the area between the weakening areas and the second end face of the connecting element facing the body structure.

In addition, it is stated that holes or recesses in the corner areas can be realized, for example, instead of using dents or beads of the weakening area for initializing the folding.

With respect to a manufacturing of the connecting element which is as advantageous as possible and to its suitability as a crash box, another embodiment further proposes that the connecting element is made of aluminum or an aluminum alloy and has a cross section which has several chambers which extend in the direction of the longitudinal axis.

With respect to relatively simple manufacturing, the cross section of the connecting element is particularly preferably rectangular.

In order to fasten the connecting element to the body structure of the vehicle, another embodiment provides that the connecting element is connected to a connecting plate for being fastened to the body structure of the vehicle on the second face facing the body structure. Alternatively, it is also possible to insert the connecting element into the body structure of the vehicle and to fasten it by screwing.

Furthermore, the invention comprises a method for producing a connecting element according to the invention, the method comprising at least the following steps: First, an (infinite) profile cross section of the connecting element having at least one screw area extending over the entire length of the profile cross section on the outer wall is created. The material of the screw area is then removed (after the separation of a part of the length of the infinite profile cross section intended for the connecting element), preferably by machining, for creating the screw section of the intended length. In a last step, the internal thread in the screw section is created.

Moreover, the invention also comprises a crash management system having two connecting elements realized according to the invention and having a bumper extending in a longitudinal direction essentially transverse to the connecting elements, the two connecting elements being spaced apart from one another in the longitudinal direction of the bumper and being connected to the bumper, the connection being carried out by at least one fastening screw on each connecting element, the at least one fastening screw passing through the bumper and interacting with the screw section on the connecting element and thus fastening the bumper to the first end face of the connecting element, the screw section preferably being aligned so as to be flush with a center plane of the bumper, and the screw sections at least being disposed on sides of the two connecting elements facing away from one another.

A preferred embodiment of the crash management system described above provides that each connecting element has two screw sections disposed on opposite sides, all screw sections preferably being aligned so as to be flush with the center plane of the bumper.

Further advantages, features and details of the invention are apparent from the following description of preferred embodiments of the invention and from the drawings.

### Short description of the drawings

- Fig. 1: shows a perspective illustration of a part of a crash management system having a connecting element fastened to a bumper, the connecting element being partially illustrated in a sectional view, and
- Fig. 2: shows a section through the connecting element in the area of the screw section of the connecting element in the direction II-II of Fig. 1.

### Embodiments of the invention

In the figures, the same elements or elements having the same function are referenced with the same reference numerals.

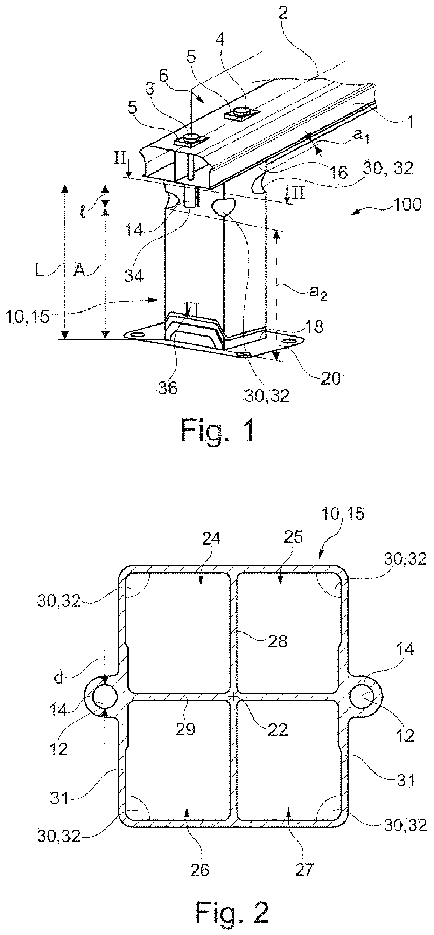

Fig. 1 shows crash management system 100 which comprises a bumper 1 and two connecting elements 10 disposed at a distance from one another in relation to a longitudinal direction 2 of bumper 1, however, only one connecting element 10 is shown in Fig. 1. Bumper 1 is typically realized as an extrusion profile and has two passage openings or holes in the area of a center plane 6 of bumper 1 for being fastened to a connecting element 10, fastening screws 3, 4 passing through said passage openings or holes and fastening screws 3, 4 each having an external thread section configured to interact with an internal thread 12 of a screw section 14 on connecting element 10.

In addition, it is stated that, if bumper 1 is curved in longitudinal direction 2, a wedgeshaped intermediate element 5, for example, can be provided on the side facing the screw heads of respective fastening screws 3, 4 to compensate the curvature of bumper 1.

Connecting element 10 is realized as an extrusion component and at the same time realizes a crash box 15 which has defined deformation properties in the case of an accident in order to at least meet the standards required by law. Connecting element 10 is preferably made of aluminum or an aluminum alloy. Connecting element 10 has a first end face 16 on the side facing bumper 1 and a second end face 18 on the side facing a body structure (not shown), in particular realized in the form of side rails. In the area of second end face 18, connecting element 10 is connected to a connecting plate 20 which is configured, in a generally known manner, to be connected to the body structure (side rail) of the vehicle. For example, the connection between connecting element 10 and connecting plate 20 is carried out by means of screw connections, welded joints or other connection techniques used in the state of the art for such purposes, depending on the geometry of connecting plate 20.

In particular Fig. 2 shows that the rectangular cross section of connecting element 10 has several chambers 24 to 27 which are spaced apart from one another, which extend in the direction of a longitudinal axis 22 of connecting element 10 perpendicular to the drawing plane of Fig. 2 and which are separated from one another by inner webs 28, 29 which are monolithically created in the manufacturing of connecting element 10. Meant merely as an example, chambers 24 to 27 are also rectangular, the node of inner webs 28, 29 being aligned flush with longitudinal axis 22. Of course, the scope of the invention also includes either the realization of another cross section on connecting element 10 or another division of the internal cross section or of chambers 24 to 27, in particular with respect to the intended crash properties of connecting element 10 or crash box 15. In particular, the option of realizing the cross section of connecting element 10 as a one-chamber profile (without inner webs 28, 29) or as a two-chamber profile (having one inner webs 28, 29) is mentioned.

Screw sections 14 used to fasten bumper 1 by means of fastening screws 3, 4 are disposed on the outer side of the cross section of connecting element 10 on opposite sides, preferably diametrically opposite in relation to longitudinal axis 22, on outer wall 31 of fastening element 10. It is essential that screw sections 14 extend almost to first end face 16 on the side facing first end face 16, preferably even being flush with first end face 16, but that said screw sections 14 end at a distance A from second end face 18 on the side facing second end face 18. In particular, length I of each screw section 14 is typically between twice and three times the diameter d of internal thread 12.

For targeted deformation or weakening of connecting element 10 in the case of a crash, connecting element 10 also has a weakening area 30 in the form of a dent 32 projecting in the direction of longitudinal axis 22 at each of the four corner areas, for example. Dents 32 are formed by a non-cutting deformation process and preferably have a curved contour. It is also important that weakening areas 30 or dents 32 have a distance a₁ from first end face 16 and a second distance a₂ from second end face 18, end surface 34 of screw section 14 facing second end face 18 either ending in front of weakening area 30 or extending into weakening area 30 in the direction of longitudinal axis 22, but at most to the area in which weakening area 30 ends on the side facing second end face 18 (distance a₂).

The manufacturing of connecting element 10 takes place in that a hollow profile having the intended profile cross section of connecting element 10 is created as an infinite component in the extrusion. A part of this component is separated according to intended length L of connecting element 10. In the manufacturing of the infinite component, screw areas 36 (merely indicated in Fig. 1) are monolithically created in the area of later screw sections 16, screw areas 36 extending over entire length L of later connecting elements 10. Said screw areas 36 can either already have a hollow channel used to create internal thread 12 for screw sections 14 in a later step or they can be made of a solid material. Screw areas 36 are then removed by machining over the parts of the length of connecting element 10 where no screw sections 14 are provided. In another step, internal threads 12 are created in screw sections 14 by another machining manufacturing process. In the meantime or subsequently, weakening areas 30 are introduced into the profile cross section of connecting element 10 and connecting plate 20 is connected to connecting element 10.

Connecting element 10 described above and crash management system 100 can be adapted or modified in many ways without departing from the idea of the invention.

### Reference signs

- 1: bumper
- 2: longitudinal direction
- 3: fastening screw
- 4: fastening screw
- 5: intermediate element
- 6: center plane
- 10: connecting element
- 12: internal thread
- 14: screw section
- 15: crash box
- 16: first end face
- 18: second end face
- 20: connecting plate
- 22: longitudinal axis
- 24: chamber
- 25: chamber
- 26: chamber
- 27: chamber
- 28: inner web
- 29: inner web
- 30: weakening area
- 31: outer wall
- 32: dent
- 34: end surface
- 36: screw area
- 100: crash management system

- a₁, a₂: distance
- A: distance
- I, L: length
- d: diameter

## Claims

1. A connecting element (10) for fastening a bumper (1) to a body structure of a vehicle, the connecting element (10) having a first end face (16) facing the bumper (1) and a second end face (18) facing the body structure, and the connecting element (10) being realized as an extrusion component and having at least one screw section (14) monolithically connected to the extrusion component and having an internal thread (12), the screw section (14) extending over a part of the length of the connecting element (10) in the direction of a longitudinal axis (22) of the connecting element (10),
**characterized in that**
the at least one screw section (14) extends at least almost to the first end face (16) via the internal thread (12) and has a length (I) which is twice to three times the diameter (d) of the internal thread (12).

2. The connecting element according to claim 1,
**characterized in that**
the at least one screw section (14) is disposed on an outer wall (31) on the side of the outer wall (31) facing away from the longitudinal axis (22).

3. The connecting element according to claim 2,
**characterized in that**
two screw sections (14) are provided, which are preferably disposed diametrically opposite to the longitudinal axis (22).

4. The connecting element according to any one of claims 1 to 3,
**characterized in that**
the connecting element (10) is realized as a crash box (15) and has a weakening area (30), in particular in the form of a dent (32) projecting in the direction of the longitudinal axis (22), on at least one outer wall (31), the dent (32) extending over a part of the length of the connecting element (10), in each case having a distance (a₁, a₂) to the two end faces (16, 18), and **in that**, on the side facing the second end face (18), the screw section (14) extends at most to the level of the side of the weakening area (30) facing the second end face (18) and preferably ends in front or within the weakening area (30).
Also: Weakening area realized as a bore.

5. The connecting element according to any one of claims 1 to 4,
**characterized in that**
the connecting element (10) is made of aluminum or an aluminum alloy and has a cross section which has several chambers (24 to 27) which extend in the direction of the longitudinal axis (22).

6. The connecting element according to any one of claims 1 to 5,
**characterized in that**
the cross section of the connecting element (10) is rectangular.

7. The connecting element according to any one of claims 1 to 6,
**characterized in that**
the connecting element (10) is connected to a connecting plate (20) for being fastened to the body structure of a vehicle on the second end face (18).

8. A method for producing a connecting element (10) realized according to any one of claims 2 to 7, the method comprising at least the following steps of
- creating a profile cross section for realizing the connecting element (10) having at least one screw area (36) extending over the entire length (L) of the profile cross section on the outer wall (31)
- removing material of the screw area (36), preferably by machining, for creating the screw section (14)
- creating the internal thread (12) in the screw section (14).

9. A crash management system (100) having two connecting elements (10), each of which is realized according to any one of claims 2 to 7, and having a bumper (1) extending in a longitudinal direction (2), the two connecting elements (10) being spaced apart from one another in the longitudinal direction (2) of the bumper (1) and being connected to the bumper (1), the connection taking place by at least one connecting screw (3, 4) on each connecting element (10), the at least one connecting screw (3, 4) passing through the bumper (1) and interacting with the screw section (14) on the connecting element (10) and fastening the bumper (1) to the first end face (16) of the connecting element (10), the screw section (14) preferably being aligned with a center plane (6) of the bumper (1), and the screw sections (14) being disposed at least on sides of the two connecting elements (10) facing away from one another.

10. A crash management system according to claim 9,
**characterized in that**
each connecting element (10) has two screw sections (14) disposed on opposite sides, all screw sections (14) preferably being aligned with the center plane (6) of the bumper (1).
